(19) Europäisches Patentamt
European Patent Office
Office européen des brevets

(11) EP 0 857 745 A2

(12) EUROPÄISCHE PATENTANMELDUNG

(43) Veröffentlichungstag:
**12.08.1998 Patentblatt 1998/33**

(51) Int. Cl.⁶: **C08G 65/40**, C08G 65/48, C08L 71/00, C08L 77/00

(21) Anmeldenummer: **98100947.5**

(22) Anmeldetag: **21.01.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **07.02.1997 DE 19704488**

(71) Anmelder:
**BASF AKTIENGESELLSCHAFT**
**67056 Ludwigshafen (DE)**

(72) Erfinder:
- **Weber, Martin, Dr.**
  **67487 Maikammer (DE)**
- **Inoue, Takashi, Prof. Dr.**
  **Aoba-ku, Yokohama 225 (JP)**

(54) **Verfahren zur Herstellung von Blockcopolymeren**

(57) Verfahren zur Herstellung von Blockcopolymeren, die Blöcke enthalten, die sich von Polyarylenethern mit Anhydridendgruppen der Formel

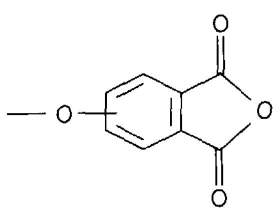

ableiten (Polyarylenether a) und Blöcke enthalten, die sich von Polyamiden mit Aminoendgruppen (Polyamide b) ableiten, das sich dadurch auszeichnet, daß man in einem ersten Schritt Polyarylenether mit Hydroxy- oder Phenoxyendgruppen oder eine Mischung dieser Endgruppen mit Phthalsäureanhydriden der allgemeinen Formel

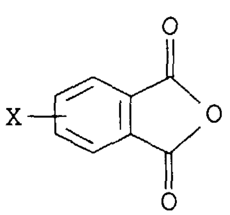 ,

worin X Fluor, Chlor, Brom oder Jod bedeuten, zu den Polyarylenethern a umsetzt und in einem weiteren Schritt die Polyarylenether a mit den Polyamiden b in der Schmelze oder in einem Lösungsmittel umsetzt.

EP 0 857 745 A2

## Beschreibung

Die vorliegende Erfindung betrifft ein Verfahren zur Herstellung von Blockcopolymeren A, enthaltend

α) einen oder mehrere Blöcke, die sich von Polyarylenethern mit wiederkehrenden Einheiten der allgemeinen Formel I

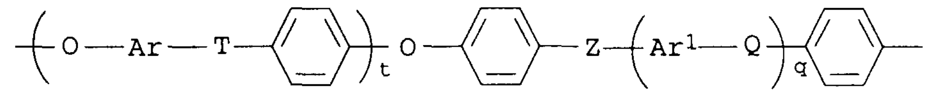

(I)

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z $-SO_2-$ oder C=O bedeutet und wenn t und q 0 sind Z $-SO_2-$ oder C=O ist,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, zusammen mit dem C-Atom an das sie gebunden sind, eine $C_4$- bis $C_7$-Cycloalkylgruppe bilden, die mit einer oder mehreren $C_1$- bis $C_6$-Alkylgruppen substituiert sein kann, bedeuten,

Ar und $Ar^1$ für $C_6$- bis $C_{18}$-Arylgruppen stehen, wobei diese unsubstituiert sein können, oder mit $C_1$- bis $C_{10}$-Alkyl, $C_6$- bis $C_{18}$-Aryl, $C_1$ bis $C_{10}$-Alkoxy oder Halogen substituiert sein können

und Anhydridendgruppen der Formel II

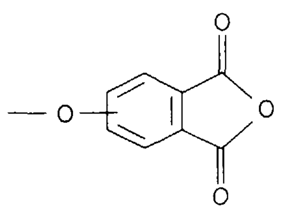

(II)

(Polyarylenether a) ableiten und

β) einen oder mehrere Blöcke, die sich von Aminoendgruppen enthaltenden Polyamiden b ableiten.

Darüber hinaus betrifft die vorliegende Erfindung die Verwendung der nach dem erfindungsgemäßen Verfahren hergestellten Blockcopolymeren A zur Herstellung von Formmassen sowie die Formmassen selbst.

Blends aus Polyarylenethern und Polyamiden sind bekannt und zeichnen sich durch eine Reihe interessanter Eigenschaften wie gute Fließfähigkeit, hohe Steifigkeit und gute Chemikalienresistenz aus. Enthalten diese Mischungen Blockcopolymere aus den beiden Mischungskomponenten, verfeinert sich deren Morphologie und die Blends gewinnen beispielsweise an Zähigkeit.

Diese Blockcopolymeren können z.B. dadurch hergestellt werden, daß eine Mischung aus einem Polyarylenether und polyamidbildenden Monomeren in Gegenwart eines Initiators miteinander umgesetzt werden (DE-A-22 10 348; EP-A-347 988; JP 56-061456; Polym. Prep. 14, 1032(1973); Polym. Prep. 31, 478 (1990), Makromol. Chem., Macromol. Symp. 75, 159 (1993)). Ebenfalls beschrieben wurde, daß sich Polyarylenether mit polyamidbildenden Monomeren in der Schmelze in einem Extruder umsetzen lassen. Diesen Verfahren zur Herstellung der Blockcopolymeren ist gemeinsam, daß auf die Blocklängen oder die Abfolge der Blöcke nur wenig Einfluß genommen werden kann.

Weiterhin konnten bislang nur Polyamid 6- oder Polyamid 6-reiche- Blockcopolymere hergestellt werden. Setzt man die Komponenten in einem Extruder um, steigt die Viskosität sehr schnell sehr stark an, sodaß bei diesem Verfahren als weiterer Nachteil hinzukommt, daß es technisch nur sehr schwer durchführbar ist. Ein anderes Verfahren zur Herstellung von Polyarylenether/Polyamid-Blockcopolymeren ist die Umsetzung aminoterminierter Polyarylenether mit Caprolactam (H. Schnablegger et al. Acta Polym. 46, 307 (1995), DE-A-2210348, Seite 10, Zeile 3). Aminoterminierte Polyarylenether sind auch die Ausgangsstoffe für das von Myers, ANTEC '92, 1992, 1,1420 vorgeschlagene Verfahren zur Herstellung von den in Rede stehenden Blockcopolymeren. Da es aber aufwendig ist, aminotermierte Polyarylenether zu synthetisieren, sind diese Verfahren für technische Maßstäbe weniger interessant. Ferner waren aus der DE-A-44 29 107 Blends auf der Basis von Copolyamiden und Polyarylenethern mit gegenüber funktionellen Gruppen der Copolyamide reaktiven Endgruppen bekannt. Bei diesem Verfahren fallen die Umsetzungsprodukte nur insitu an.

Aufgabe der vorliegenden Erfindung war es daher, ein neues Verfahren zur Herstellung von Blockcopolymeren aus Polyarylenether- und Polyamidblöcken zur Verfügung zu stellen, das es zuläßt, die Produkte hinsichtlich ihrer Blocklänge und ihrer chemischen Struktur zu variieren und durch das Blockcopolymere zugänglich werden, die einen geringen Anteil der jeweiligen Homopolymeren aufweisen.

Demgemäß wurde ein Verfahren gefunden, das sich dadurch auszeichnet, daß man in einem ersten Schritt Polyarylenether mit wiederkehrenden Einheiten der allgemeinen Formel I und die Hydroxy- oder Phenoxyendgruppen oder eine Mischung dieser Endgruppen enthalten (Polyarylenether a') mit Phthalsäureanhydriden der allgemeinen Formel III

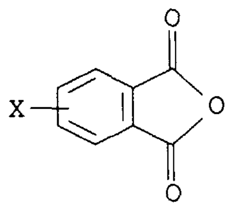

(III)

worin X Fluor, Chlor, Brom oder Jod bedeutet, umsetzt.

Die in der allgemeinen Formel I

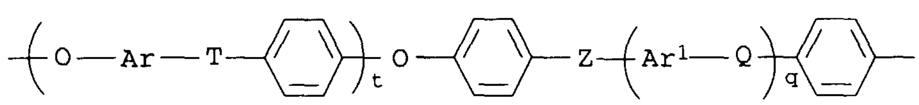

(I)

genannten Variablen t und q können jeweils den Wert 0, 1, 2 oder 3 annehmen. T, Q und Z können unabhängig voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. $R^c$ und $R^d$ können auch zusammen mit dem Kohlenstoffatom, an das sie gebunden sind, zu einem Cycloalkylring mit 4 bis 7 Kohlenstoffatomen verknüpft sein. Bevorzugt werden darunter Cyclopentyl oder Cyclohexyl. Die Cycloalkylringe können unsubstituiert sein oder mit einem oder mehreren, bevorzugt zwei oder drei $C_1$- bis $C_6$-Alkylgruppen substituiert sein. Zu den bevorzugten Substituenten der Cycloalkylringe zählt Methyl. Bevorzugt werden Polyarylenether A' eingesetzt, in denen T, Q und Z -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T, Q und Z bedeutet mindestens eine $-SO_2-$ oder C=O. Sind die beiden Variablen t und q 0, dann ist Z entweder $-SO_2-$ oder C=O, bevorzugt $-SO_2-$. Ar und $Ar^1$ stehen für $C_6$- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch einen oder mehrere, beispielsweise zwei Substituenten haben. Als Substituenten kommen $C_1$- bis $C_{10}$-Alkyl- wie Methyl, Ethyl, n-Propyl, i-Propyl, t-Butyl, n-Hexyl, $C_6$- bis $C_{18}$-Aryl wie Phenyl oder Naphthyl, $C_1$- bis $C_{10}$-Alkoxyreste wie Methoxy, Ethoxy, n-Propoxy, i-Propoxy, n-Butoxy und Halogenatome in Betracht. Zu den davon bevorzugten Substituenten gehören Methyl, Phenyl, Methoxy und Chlor.

Einige geeignete wiederkehrende Einheiten sind im folgenden aufgeführt:

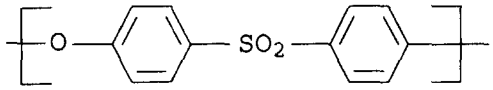

($I_1$)

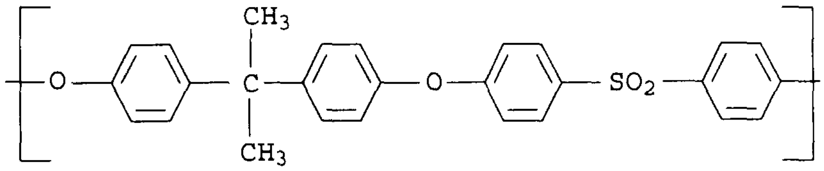

($I_2$)

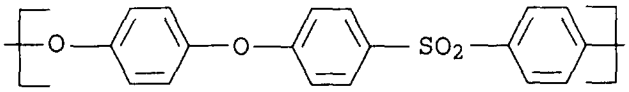

($I_3$)

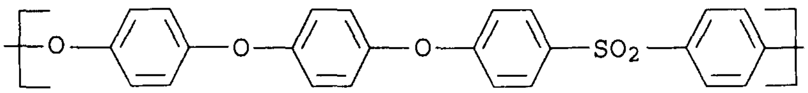

($I_4$)

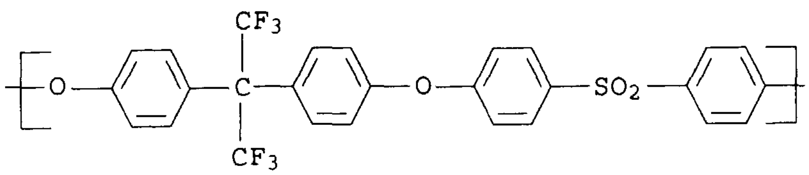

($I_5$)

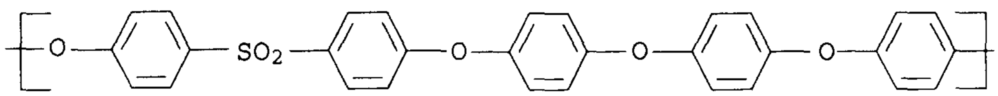

($I_6$)

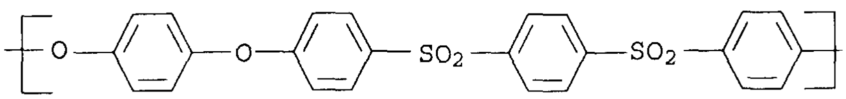

($I_7$)

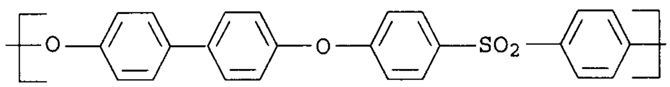
(I8)

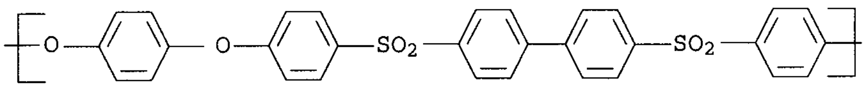
(I9)

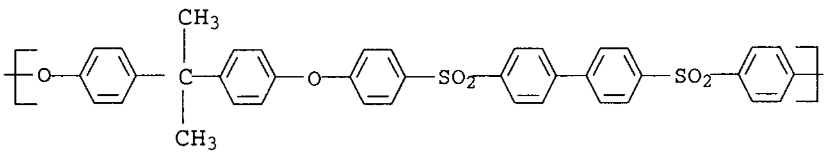
(I10)

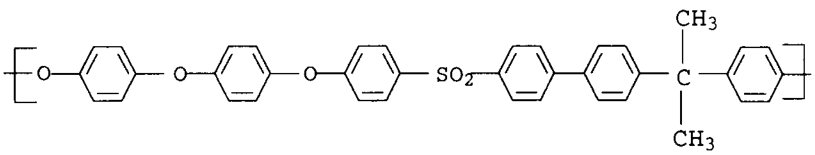
(I11)

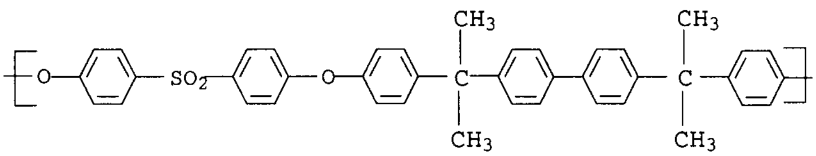
(I12)

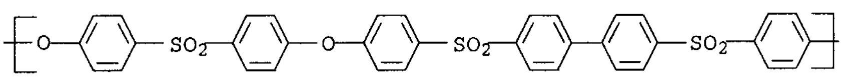
(I13)

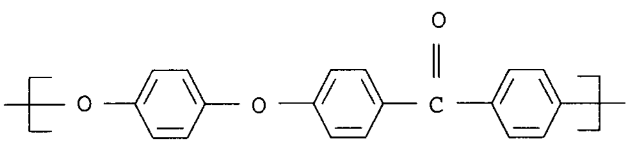
(I14)

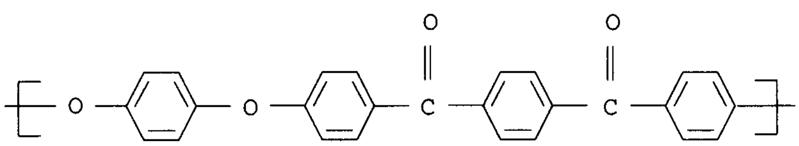
(I15)

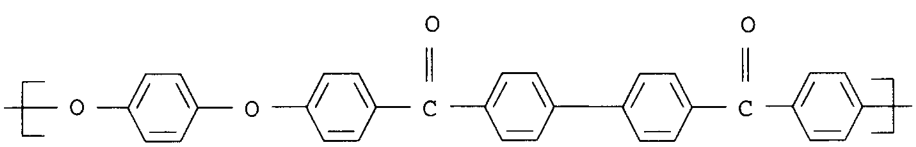
(I16)

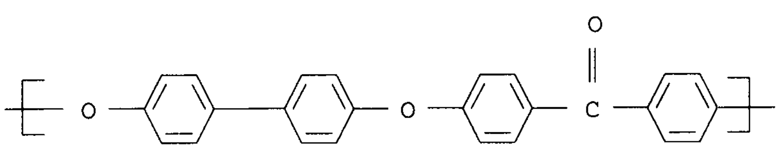
(I17)

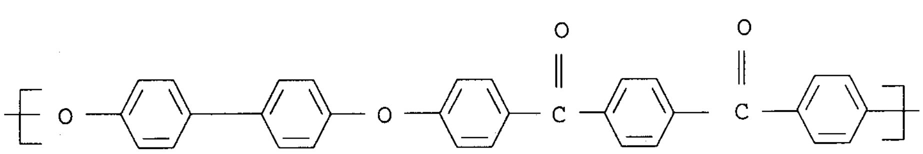
(I18)

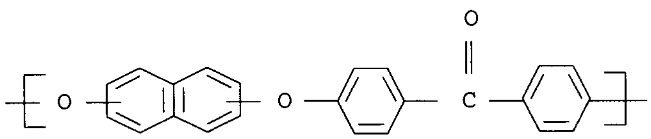

$(I_{19})$

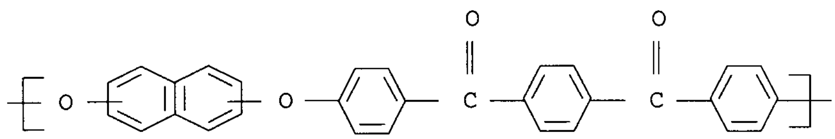

$(I_{20})$

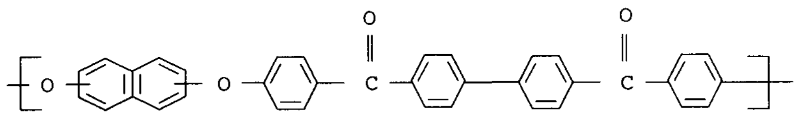

$(I_{21})$

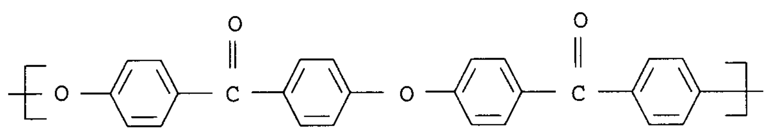

$(I_{22})$

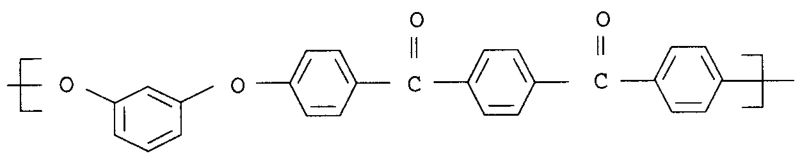

$(I_{23})$

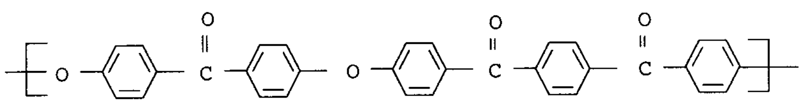

$(I_{24})$

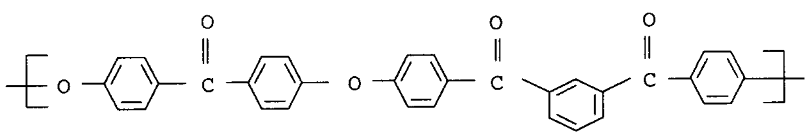

$(I_{25})$

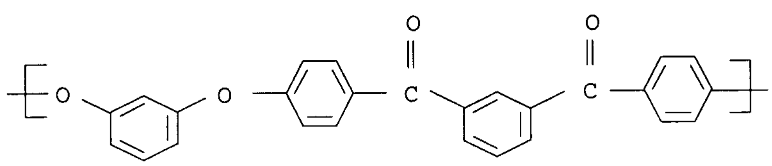

$(I_{26})$

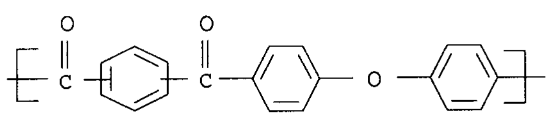

$(I_{27})$

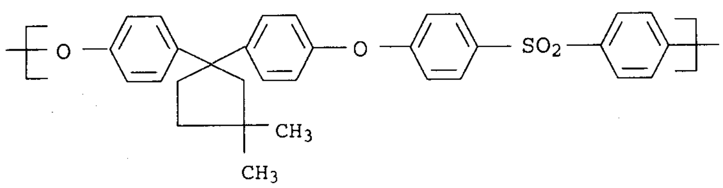

$(I_{28})$

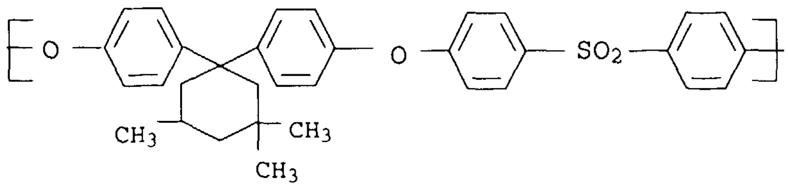

($I_{29}$)

Ganz besonders bevorzugt werden Polyarylenether a' mit wiederkehrenden Einheiten ($I_1$), ($I_2$), ($I_8$), ($I_{24}$) oder ($I_{25}$). Dazu zählen beispielsweise Polyarylenether a' mit 0 bis 100 Mol-% wiederkehrenden Einheiten ($I_1$) und 0 bis 100 Mol-% wiederkehrenden Einheiten ($I_2$).

Die Polyarylenether a' können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Derartige Co- oder Blockcopolymere enthalten jeweils mindestens ein äußeres Polyarylenethersegment mit einer Hydroxyendgruppe. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether a' mittlere Molekulargewichte $\overline{M}_n$ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 %iger Schwefelsäure bei jeweils 20°C bzw. 25°C gemessen.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Polyarylenether mit wiederkehrenden Einheiten I und Hydroxy- oder Phenoxyendgruppen oder deren Mischungen können beispielsweise durch geeignete Wahl des molaren Verhältnisses zwischen Dihydroxy- und Dichlormonomeren hergestellt werden (siehe z.B. J.E. McGrath et al: Polym. Eng. Sci. 17, 647 (1977); H.-G. Elias "Makromoleküle" 4. Aufl., S. 490-493, (1981), Hüthig & Wepf-Verlag, Basel).

Bevorzugt werden Polyarylenether a' verwendet, die 0,02 bis 2 Gew.-% Hydroxy- oder Phenoxyendgruppen oder deren Mischungen aufweisen. Ganz besonders werden solche bevorzugt, die 0,1 bis 1,5 Gew.-% Hydroxy- oder Phenoxyendgruppen oder deren Mischungen haben.

Erfindungsgemäß werden die Polyarylenether a' in einem ersten Schritt mit Phthalsäureanhydriden der allgemeinen Formel III umgesetzt. Darunter sind die Chlorphthalsäureanhydride und die Fluorphthalsäureanhydride bevorzugt. Besonders bevorzugt werden 3-Fluorphthalsäureanhydrid oder 3-Chlorphthalsäureanhydrid verwendet. Es kann aber auch von Vorteil sein, eine Mischung aus unterschiedlichen Phthalsäureanhydriden III, beispielsweise eine Mischung aus 3-Fluorphthalsäureanhydrid und 3-Chlorphthalsäureanhydrid einzusetzen. Dabei ist es möglich, die unterschiedlichen Phthalsäureanhydride III gleichzeitig mit den Polyarylenethern A' umzusetzen. Es ist aber auch möglich, diese nacheinander beispielsweise zunächst 3-Fluorphthalsäureanhydrid und anschließend 3-Chlorphthalsäureanhydrid, umzusetzen.

Die Umsetzung der hydroxy- bzw. phenoxy terminierten Polyarylenether a' mit den Phthalsäureanhydriden (III) zu den Polyarylenethern a findet im allgemeinen in einem Lösungsmittel, insbesondere einem Lösungsmittel, das sowohl die Polyarylenether a', die Phthalsäureanhydride III als auch Kaliumfluorid, das als Katalysator zugesetzt werden kann, hinreichend gut löst, statt. Als Beispiele geeigneter organischer Lösungsmittel sind aliphatische oder aromatische Sulfoxide oder Sulfone wie Dimethylsulfoxid, Dimethylsulfon, 1,1-Dioxothiolan oder Diphenylsulfon, worunter Dimethylsulfoxid und Diphenylsulfon bevorzugt zu nennen ist. Darüber hinaus kommen N-Cyclohexylpyrrolidon, N,N-Dimethylacetamid, Dimethylformamid und N-Methylpyrrolidon in Betracht. Besonders bevorzugt wird N-Methylpyrrolidon eingesetzt. Für die Umsetzungen sind im allgemeinen erhöhte Temperaturen erforderlich. In der Regel findet die Reaktion unterhalb einer Temperatur von 60°C nur langsam statt. Meist sind Temperaturen von 100°C oder darüber erforderlich. Im allgemeinen finden die Umsetzungen in einem Temperaturbereich von 120 bis 250°C statt. Höhere Temperaturen als 230°C sind meist nicht erforderlich.

Die zur Umsetzung erforderlichen Reaktionszeiten betragen im allgemeinen von 0,1 bis 5 Stunden.

Die Umsetzung kann sowohl in Abwesenheit als auch in Gegenwart von Kaliumfluorid durchgeführt werden. Im allgemeinen wird das Kaliumfluorid in stöchiometrischen Mengen zu Phthalsäureanhydrid III eingesetzt. Die Menge an Kaliumfluorid kann aber auch darüber liegen und beispielsweise bis zu 10 Mol pro Mol Phthalsäureanhydrid III betragen. Es können aber auch kleinere Kaliumfluoridmengen verwendet werden. In der Regel beträgt das molare Verhältnis von Kaliumfluorid zu Phthalsäureanhyrid von 0 bis 7, bevorzugt von 0,1 bis 6.

Die Reaktion kann auch in Gegenwart von Kaliumcarbonat durchgeführt werden. Im allgemeinen wird von 0,005 bis 10 Mol Kaliumcarbonat pro Mol Kaliumfluorid verwendet. Die Menge an Kaliumcarbonat kann jedoch auch kleiner sein, beispielsweise von 0,005 bis 9 Mol Kaliumcarbonat pro Mol Kaliumfluorid betragen. In der Regel bringt es keine Vorteile mehr, wenn Kaliumcarbonat in Mengen von mehr als 15 Mol pro Mol Kaliumfluorid zugegeben wird. Meist wird die Umsetzung in Gegenwart von 0,005 bis 7 Mol Kaliumcarbonat pro Mol Kaliumfluorid durchgeführt. Die Umsetzung der Polyarylenether a' mit den Phthalsäureanhydriden kann sowohl mit gereinigten und isolierten Polyarylenethern a' vorgenommen werden. Es ist aber auch möglich, diese Umsetzung direkt an die Herstellung der Polyarylenether a' anzuschließen, ohne diese vorher zu reinigen oder zu isolieren. Das Reaktionsprodukt wird vorzugsweise durch Ausfällen in einem Nichtlösungsmittel, beispielsweise einem niedermolekularen Alkohol wie Methanol, Ethanol, Propanol oder Isopropanol oder auch Wasser sowie Mischungen derselben gewonnen. Es ist aber auch möglich, das Reaktionslösungsmittel aus dem Reaktionsprodukt, beispielsweise im Entgasungsextruder oder Dünnschichtverdampfer, zu entfernen und so das Reaktionsprodukt zu isolieren.

Der Anteil an Anhydridendgruppen im Polyarylenether a kann durch die bekannten Methoden der allgemeinen organischen Analytik wie Titration, IR-, UV- und NMR-Spektroskopie bestimmt werden.

Die nach dem erfindungsgemäßen Verfahren hergestellten Polyarylenether a weisen im allgemeinen die selben Molekulargewichte auf, wie die ihnen zugrunde liegenden Polyarylenether a', d.h. ein Molekulargewichtsabbau findet im Verlauf der Umsetzung von a' mit den Phthalsäureanhydriden III nicht oder nur im untergeordneten Maße statt.

In einem weiteren Schritt werden erfindungsgemäß die Polyarylenether a mit Aminoendgruppen enthaltenden Polyamiden b umgesetzt. Als Polyamide b kommen thermoplastische Polyamide in Betracht. Derartige Polyamide sind an sich bekannt und umfassen teilkristalline und amorphe Harze mit einem Molekulargewicht (Gewichtsmittelwert) von mindestens 1000, die gewöhnlich als Nylon bezeichnet werden. Solche Polyamide sind z.B. in den US-Patentschriften 2 071 250, 2 071 251, 2 130 523, 2 130 948, 2 241 322, 2 312 966, 2 512 606 und 3 393 210 beschrieben.

Die Polyamide b können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Beispiele für derartige Polyamide b sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, Polyamide b zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Als Monomere kommen auch cyclische Diamine wie die der allgemeinen Formel V

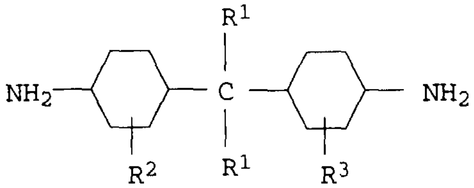

(V)

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet, in Betracht.

Besonders bevorzugte Diamine V sind Bis(4-aminocyclohexyl)methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine V seien 1,3- oder 1,4-Cyclohexandiamin oder Isophorondiamin genannt.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide b mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z.B. nach dem in den EP-A-129 195 und EP 129 196 beschriebenen Verfahren erfolgen.

Bevorzugte teilaromatische Polyamide b sind solche, die einen Gehalt an Triamineinheiten, insbesondere Einheiten des Dihexamethylentriamins von unter 0,5 Gew.-% aufweisen. Besonders bevorzugt werden solche teilaromatischen Polyamide b mit Triamingehalten von 0,3 Gew.-% oder weniger.

Bevorzugt werden lineare Polyamide b mit einem Schmelzpunkt über 200°C.

Bevorzugte Polyamide b sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im allgemeinen eine relative Viskosität von 2,0 bis 5 auf, bestimmt an einer 1 gew.-%igen Lösung in 96 %iger Schwefelsäure bei 23°C, was einem Molekulargewicht (Zahlenmittel) von etwa 15 000 bis 45 000 entspricht. Polyamide mit einer relativen Viskosität von 2,4 bis 3,5, insbesondere 2,5 bis 3,4, werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide b dieser Struktur sind z.B. in den EP-A 38 094, EP-A 38 582 und EP-A 39 524 beschrieben.

Bevorzugt werden Polyamide b eingesetzt, die von 0,01 bis 3,2 Gew.-% Aminoendgruppen aufweisen. Ganz besonders bevorzugt werden Polyamide, die von 0,015 bis 3,0 Gew.-% Aminoendgruppen haben.

Die Polyarylenether a können mit den Polyamiden b in der Schmelze umgesetzt werden. Hierzu können die Polyamide b zu einer Schmelze der Polyarylenether a zugegeben werden oder umgekehrt. Dabei kann die jeweils zudosierte Komponente fest, gelöst oder als Schmelze vorliegen. Die Umsetzung kann in einem Mischaggregat, einem Kneter oder einem Extruder vorgenommen werden. Bevorzugt findet die Umsetzung in einem Extruder statt. Im Allgemeinen werden die Komponenten bei einer Temperatur im Bereich von 270 bis 340, bevorzugt von 280 bis 385°C miteinander umgesetzt. Die Reaktionszeit hängt von der Reaktivität der eingesetzten Komponenten ab. Das Ende der Reaktion läßt sich beispielsweise spektroskopisch ermitteln. In der Regel ist die Reaktionsdauer nicht länger als zehn Minuten.

Erfindungsgemäß können die Blockcopolymeren A auch dadurch hergestellt werden, daß die Polyarylenether a mit den Polyamiden b in Lösung umgesetzt werden. Vorzugsweise werden hierzu die Polyarylenether a in einem Lösungsmittel gelöst. Ungelöste feste Bestandteile werden in der Regel bevorzugt mittels Druckfiltration aus der Lösung entfernt. Anschließend wird die Lösung in der Regel gekühlt, bevorzugt auf eine Temperatur im Bereich von -5 bis +5°C und das in einem Lösungsmittel aufgenommene Polyamid b zugegeben. Es ist aber auch möglich die gelöste Komponente b vorzulegen und anschließend eine Lösung von a zuzugeben. Die Reaktionsmischung wird im Allgemeinen auf eine Temperatur von mehr als 160, bevorzugt mehr als 190°C erhitzt. Es ist zweckmäßig entstehendes Reaktionswasser abzudestillieren, um die Imidisierung zu fördern. Das Reaktionswasser kann mit dem Lösungsmittel abdestilliert werden. Diesem kann ein schleppmittel zugegeben sein. Der Verlauf der Reaktion läßt sich z.B. spektroskopisch verfolgen. Im Allgemeinen wird das Reaktionsgemisch für einen Zeitraum von zwei bis 10 Stunden erhitzt und das Blockcopolymere anschließend, bevorzugt durch Ausfällen in einem Nichtlösungsmittel isoliert. Reste von Lösungsmittel und/oder Nichtlösungsmittel können beispielsweise in einem Entgasungsextruder oder einem Dünnschichtverdampfer entfernt werden.

Als Lösungsmittel kommen aliphatische oder aromatische Sulfoxide oder Sulfone in Betracht. Darunter eigenen sich Dimethylsulfoxid, Dimethylsulfon, 1,1-Dioxothiolan oder Diphenylsulfon. Weitere Beispiele geeigneter Lösungsmittel sind N-Methylpyrrolidon, N,N,-Dimethylacetamid oder Dimethylformamid. Mischungen unterschiedlicher Lösungsmittel können ebenfalls eingesetzt werden. Besonders bevorzugt wird N-Methylpyrrolidon als Lösungsmittel verwendet.

Als Nichtlösungsmittel kann z.B. ein niedermolekularer Alkohol wie Methanol, Ethanol oder Isopropanol oder Wasser oder deren Mischungen eingesetzt werden.

Die nach dem erfindungsgemäßen Verfahren hergestellten Blockcopolymere A enthalten im allgemeinen von 5 bis 95, bevorzugt von 7 bis 93 Gew.-% Blöcke, die sich von den Polyarylenethern a ableiten und von 5 bis 95, bevorzugt von 7 bis 93 Gew.-% Blöcke, die sich von den Polyamiden b ableiten. Der Anteil an Ausgangspolymeren a und b beträgt im Allgemeinen nicht mehr als 40, bevorzugt nicht mehr als 35 Gew.-%.

Die nach dem erfindungsgemäßen Verfahren erhältlichen Blockcopolymeren weisen gute mechanische Eigenschaften auf.

Sie eignen sich zum Herstellen von Formmassen.

In einer bevorzugten Ausführungsform enthalten die Formmassen die Komponenten

A) 4 bis 98 Gew.-%, insbesondere 5 bis 96 Gew.-% mindestens eines Blockcopolymeren A,

B) 1 bis 95 Gew.-%, insbesondere 2 bis 93 Gew.-%, mindestens eines Polyarylenethers B,

C) 0 bis 60 Gew.-%, insbesondere 0 bis 50 Gew.-% faser- oder teilchenförmige Verstärkungs- oder Füllstoffe oder deren Mischungen,

D) 1 bis 95 Gew.-%, insbesondere 2 bis 93 Gew.-% mindestens eines thermoplastischen Polyamides D und

E) 0 bis 40 Gew.-%, insbesondere 0 bis 30 Gew.-% schlagzähmodifizierende Kautschuke E, wobei sich die Summe der Komponenten A bis E jeweils zu 100 Gew.-% addiert.

In einer andern bevorzugten Ausführungsform enthalten die Formmassen die Komponenten

A) 1 bis 99 Gew.-%, insbesondere 25 bis 98,5 Gew.-% mindestens eines Blockcopolymeren A,

C) 1 bis 59 Gew.-%, insbesondere 1,5 bis 45 Gew.-% faser- oder teilchenförmige Verstärkungs- oder Füllstoffe oder deren Mischungen und

E) 0 bis 40 Gew.-%, insbesondere 0 bis 30 Gew.-% schlagzäh modifizierende Kautschuke E, wobei sich die Summe der Komponenten A bis E jeweils zu 100 Gew.-% addiert.

Komponente B

Neben den Blockcopolymeren A können die Formmassen auch Polyarylenether B enthalten, die wiederkehrenden Einheiten der allgemeinen Formel IV

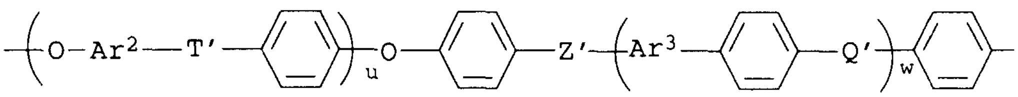 (IV)

enthalten.

Dabei haben u und w die gleiche Bedeutung wie t und q. u und w können, brauchen aber nicht mit t und q identisch sein, d.h. u und w können unabhängig von t und q gleich oder verschieden von diesen sein. T', Q' und Z' haben die gleiche Bedeutung wie T, Q und Z und können, brauchen aber nicht mit T, Q und Z identisch sein, d.h. T', Q' und Z' können unabhängig von T, Q und Z gleich oder verschieden von T, Q und Z sein. $Ar^2$ und $A^3$ können gleich oder verschieden von Ar und $Ar^1$ sein, d.h. $Ar^2$ und $Ar^3$ können, brauchen aber nicht mit Ar und $Ar^1$ identisch sein und haben die gleiche Bedeutung wie Ar und $Ar^1$.

Als Komponente B können auch Polyarylenethersegmente enthaltende Copolymere eingesetzt werden.

Die Polyarylenether B können beispielsweise Halogen-, Methoxy-, Hydroxy-, Phenoxy-, Benzyloxy- oder Aminoendgruppen enthalten. Bevorzugt werden Polyarylenether B mit Halogen- und/oder Methoxyendgruppen verwendet.

Diese Polyarylenether B sind, wie vorstehend bei der Beschreibung der Polyarylenether a' angegeben, bekannt oder nach bekannten Methoden erhältlich.

Die Polyarylenether B können in den erfindungsgemäßen Formmassen mit einem Anteil von 1 bis zu 95, vorzugsweise bis zu 93 Gew.-% vorhanden sein.

Komponente C

Neben den Komponenten A und B können die Formmassen noch Verstärkungsmittel oder Füllstoffe enthalten. Als Komponente C können die erfindungsgemäßen Formmassen z.B. bis 60, vorzugsweise 0 bis 50 Gew.-% faser- oder teilchenförmige Füllstoffe oder Verstärkungsstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 25 Gew.-% Glasfasern mit 5 Gew.-% Wollastonit oder 15 Gew.-% Glasfasern mit 15 Gew.-% Wollastonit.

Komponente D

Neben den Komponenten A bis C können die erfindungsgemäßen Formmassen auch noch thermoplastische Polyamide enthalten. Die als Komponente D in den Massen enthaltenen Polyamide sind ebenfalls bekannt.

Aufbau und Herstellung geeigneter Polyamide D entspricht dem der bereits beschriebenen Polyamide b. Allerdings können als Polyamide D auch Polyamide eingesetzt werden, die keine Aminoendgruppen aufweisen.

Der Anteil der Polyamide D an den Formmassen kann 1 bis 95, vorzugsweise 2 bis 93 und insbesondere 3 bis 90 Gew.-% betragen.

Komponente E

Neben den Komponenten A bis D können die Formmassen auch bis 40, vorzugsweise 0 bis 30 Gew.-% eines schlagzähmodifizierenden Kautschuks E enthalten. Es können übliche Schlagzähmodifier verwendet werden, die für Polyamide und/oder Polyarylenether geeignet sind.

Kautschuke, die die Zähigkeit von Polyamiden und/oder Polyarylenethern erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern- Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente F

Neben den beschriebenen Bestandteilen A bis D können die erfindungsgemäßen Formmassen noch 0 bis 40

Gew.-% Flammschutzmittel, Pigmente und Stabilisatoren enthalten.

Die erfindungsgemäßen Formmassen können nach an sich bekannten Verfahren, beispielsweise Extrusion, hergestellt werden.

Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mühlen oder Banburry-Mühlen sowie Knetern mischt und anschließend extrudiert. Nach der Extrusion wird das Extrudat abgekühlt und zerkleinert.

Die Reihenfolge der Mischung der Komponenten kann variiert werden, sie können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 250 bis 400°C, bevorzugt 280 bis 380°C, erforderlich. Nach der Extrusion wird das Extrudat in der Regel abgekühlt und zerkleinert.

Die erfindungsgemäßen Formmassen lassen sich thermoplastisch verarbeiten. Sie zeichnen sich durch gute Reißdehnungen bei gleichzeitig guten Zähigkeiten aus. Die erfindungsgemäßen Formmassen eignen sich vor allem zur Herstellung von Formkörpern beispielsweise auf dem Gebiet der Elektrotechnik oder der Elektronik. Neben Formkörpern können auch Folien oder Fasern aus den erfindungsgemäßen Formmassen hergestellt werden.

## Beispiele

Die Blockcopolymeren A1 bis A5 wurden aus den unten beschriebenen Blöcken a1, a2, b1 und b2 hergestellt.

Die Formmassen wurden aus den in den Tabellen angegebenen Komponenten hergestellt, indem die Komponenten in einem Zweiwellenextruder (ZKS 30 der Firma Werner und Pfleiderer) bei einer Massetemperatur von 300 bis 350°C gemischt wurden. Anschließend wurde die Schmelze durch ein Wasserbad geleitet und granuliert. Die Formmassen, die Polyarylenetherblöcke a2 enthielten, wurden bei einer Massetemperatur von 310 °C verarbeitet, während diejenigen, die Polyarylenetherblöcke a1 enthielten bei einer Massetemperatur von 350°C verarbeitet wurden. Die Formtemperatur betrug jeweils 100°C.

Die Reinheit der Blockcopolymere wurde mittels Extraktion mit Ameisensäure (Lösungsmittel für Polyamid) und einem selektiven Lösungsmittel für Polyarylether, vorzugsweise Dimethylformamid, ermittelt. Die Blockcopolymere wurden auch mittels DSC (Aufheizrate 20 K/min) charakterisiert. Der Gehalt an Anhydridendgruppen in den Blöcken a1 und a2 wurde durch FT-IR-Spektroskopie bestimmt. Die Viskositätszahlen (VZ) der Produkte wurden in 1%iger Lösung in N-Methylpyrrolidon (NMP) bei 25°C bestimmt.

Das getrocknete Granulat aus den Formmassen wurde zu Normkleinstäben (50 x 6 x 4 mm) sowie Zugstäben (150 x 20 (10) x 4 mm) und Isoprüfkörpern gespritzt. Auch wurden Filme dadurch hergestellt, daß Lösungen der Polymere plan aufgetragen und zuerst bei Raumtemperatur und anschließend im Vakuum getrocknet wurden.

Die Transparenz der Filme wurde qualitativ optisch beurteilt.

Das Elastizitätsmodul (E-Modul [$N/mm^2$]) wurde nach DIN 53 457 aus der Neigung der Tangente am Ursprung der Zugspannungskurve bei einer Prüfgeschwindigkeit von 1 mm pro Minute an Zugstäben ermittelt (Mittelwert aus 10 Prüfungen).

Die Schlagzähigkeit ($a_n$) wurde nach ISO 179 1eU bestimmt.

Die Zugfestigkeit ($\sigma_B$) und die Reißdehnung ($\sigma_R$) wurden aus Zugversuchen nach DIN 53 455 ermittelt.

### Polyarylenetherblock a1

Unter Stickstoffatmosphäre wurden 4,593 kg Dichlordiphenylsulfon, 4,002 kg Dihydroxydiphenylsulfon in 29 kg N-Methylpyrrolidon gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach dieser Zeit wurden der Reaktionsmischung 235 g 4-Fluorphthalsäureanhydrid zugesetzt und die Reaktion 0,2 h bei 190°C weitergeführt.

Nach Zugabe von 40 kg N-Methylpyrrolidon wurden die anorganischen Bestandteile abfiltriert, anschließend wurde das Polymere durch Fällung in Wasser isoliert. Nach Extraktion mit Wasser wurde das Produkt bei 160°C im Vakuum getrocknet. Es wurde ein weißes Material erhalten.

Der Gehalt an Phthalsäureanhydridengruppen betrug 0,83 Gew.-%, die Viskositätszahl des Polyarylenethers a1 betrug 49,7 ml/g.

### Polyarylenetherblock a2

Unter Stickstoffatmosphäre wurden 4,93 kg Dichlordiphenylsulfon, 3,652 kg Bisphenol A in 29 kg N-Methylpyrrolidon gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach dieser Zeit wurden der Reaktionsmischung 235 g 4-Fluorphthalsäureanhydrid zugesetzt und die Reaktion 0,2 h bei 190°C weitergeführt.

Nach Zugabe von 40 kg N-Methylpyrrolidon wurden die anorganischen Bestandteile abfiltriert, anschließend wurde das Polymer durch Fällung in Wasser isoliert. Nach Extraktion mit Wasser wurde das Produkt bei 160°C im Vakuum getrocknet. Es wurde ein weißes Material erhalten.

Der Gehalt an Phthalsäureanhydridengruppen betrug 0,76 Gew.-%, die Viskositätszahl des Polyarylenethers a2 betrug 53,4 ml/g.

Polyamidblock b1

Als Polyamidblock b1 wurde ein amorphes Polyamid aus Hexamethylendiamin und Isophthalsäure mit einer Viskositätszahl von 46 ml/g (in 1 gew.-%iger Schwefelsäure) und 0,25 Gew.-% Aminoendgruppen verwendet, das durch Polykondensation von Hexamethylendiamin und Isophthalsäure (bei 20 bar, 280°C, 6 h) erhalten wurde. Die Glastemperatur dieses Produktes betrug 125°C.

Polyamidblock b2

Als Polyamidblock b2 wurde ein teilaromatisches Copolyamid, kondensiert aus 55 Gew.-Teilen Terephthalsäure, 35 Gew.-Teilen ε-Caprolactam und 38,5 Teilen Hexamethylendiamin, charakterisiert durch eine Viskositätszahl von 46 ml/g (gemessen 1 gew.-%ig in 96 %iger Schwefelsäure) und 0,22 Gew.-% Aminoendgruppen eingesetzt.
Dieses Produkt ist des Weiteren durch eine Glasstufe bei 110°C und einen Schmelzpeak bei 289°C charakterisiert.

Blockcopolymer A1

Unter Stickstoffatmosphäre wurden 10 g des Polyarylenetherblocks a1 in 100 ml N-Methylpyrrolidon gelöst. Zu dieser Lösung wurden bei 0°C eine Lösung von 10 g Polyamidblock b1 in N-Methylpyrrolidon langsam zugetropft. Nach vollendeter Zugabe wurde die Lösung noch 30 Minuten bei Raumtemperatur gerührt, anschließend wurde die Mischung für einen Zeitraum von 6 h auf 195°C erwärmt. Nachdem die Lösung abgekühlt war, wurde das Reaktionsprodukt durch Fällung in Wasser isoliert. Das erhaltene Produkt wurde mehrfach mit Wasser extrahiert und für 12 h bei 100°C im Vakuum getrocknet.

Blockcopolymer A2

Unter Stickstoffatmosphäre wurden 10 g des Polyarylenetherblocks a2 in 100 ml N-Methylpyrrolidon gelöst. Zu dieser Lösung wurden bei 0°C eine Lösung von 10 g Polyamidblock b1 in N-Methylpyrrolidon langsam zugetropft. Nach vollendeter Zugabe wurde die Lösung noch 30 Minuten bei Raumtemperatur gerührt, anschließend wurde die Mischung für einen Zeitraum von 6 h auf 195°C erwärmt. Nachdem die Lösung abgekühlt war, wurde das Reaktionsprodukt durch Fällung in Wasser isoliert. Das erhaltene Produkt wurde mehrfach mit Wasser extrahiert und für 12 h bei 100°C im Vakuum getrocknet.

Blockcopolymer A3

In einem Haake Mixer Rheomix 600 wurden 25 g Polyarylenetherblocks a1 und 25 g Polyamidblock b1 bei einer Gehäusetemperatur von 300$^0$C für 5 Minuten innig vermischt. Das erhaltene Produkt wurde ausgetragen und nach Abkühlung unter Stickstoff zerkleinert.

Blockcopolymer A4

Unter Stickstoffatmosphäre wurden 4,593 kg Dichlordiphenylsulfon, 4,002 kg Dihydrodiphenylsulfon in 29 kg N-Methylpyrrolidon gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach dieser Zeit wurden 235 g 4-Fluorphthalsäureanhydrid der Mischung zugesetzt und die Reaktion 0,2 h bei 190°C weitergeführt.

Nach Zugabe von 20 kg N-Methylpyrrolidon wurden die anorganischen Bestandteile abfiltriert und die Lösung auf

0°C abgekühlt. Zu dieser Lösung wurde innerhalb einer Stunde eine Lösung von 8 kg des Polyamids b1 in 40 kg N-Methylpyrrolidon zugegeben. Die Reaktionslösung wurde dann für 6h auf 190°C erhitzt, anschließend wurde das Polymere durch Fällung in Wasser isoliert. Nach Extraktion mit Wasser wurde das Produkt bei 160°C im Vakuum getrocknet. Es wurde ein weißes Material erhalten.

Blockcopolymer A5

In einem Zweischneckenextruder (ZSK 30 der Firma Werner und Pfleiderer) wurden 2,5 kg Polyarylenetherblock a1 und 2,5 kg Polyamidblock b2 bei einer Gehäusetemperatur von 340°C und einem Durchsatz von 10 kg/h extrudiert. Die Schmelze wurde in Wasser abgekühlt und granuliert.

Die Eigenschaften der Blockcopolymeren A1 bis A5 sind in Tabelle 1 aufgeführt.

Zur Herstellung von Formmassen wurden als weitere Komponenten verwendet:

Komponente B1

Als Polyarylenether B1 wurde Ultrason® E010 (Handelsprodukt der BASF Aktiengesellschaft) verwendet. Dieses Produkt enthielt die wiederkehrenden Einheiten $I_1$ und ist charakterisiert durch eine Viskositätszahl von 49 ml/g, gemessen in 1 %iger NMP-Lösung bei 25°C.

Komponente B2

Als Polyarylenether B2 wurde Ultrason S 2010 (Handelsprodukt der BASF Aktiengesellschaft) verwendet. Dieses Produkt enthielt die wiederkehrenden Einheiten $I_2$ und ist charakterisiert durch eine Viskositätszahl von 56 ml/g, gemessen in 1 %iger NMP-Lösung bei 25°C.

Komponente C1

Wollastonit

Komponente C2

Glasfaserrovings mit der Dicke von 10 μm aus E-Glas, die mit einer Schlichte aus Polyurethan ausgerüstet waren. Nach dem Einarbeiten lagen die mittleren Glasfaserlängen etwa zwischen 0,1 und 0,5 mm.

Komponente D1

Als Komponente D1 wurde Polyamidblock b2 verwendet.

Komponente E1

Ethylen-Propylenkautschuk, mit 0,7 Gew.-% Maleinsäureanhydrid modifiziert, gekennzeichnet durch eine Fließfähigkeit (MFI-Wert von 3 g/10 min (gemessen bei einer Belastung von 2,16 kg und einer Temperatur von 230°C).

Tabelle 1

| Eigenschaften der Blockcopolymere | | | | | |
|---|---|---|---|---|---|
| Blockcopolymer | A1 | A2 | A3 | A4 | A5 |
| Tg1[°C] | 124 | 124 | 124 | 124 | 109 |
| Tg2[°C] | 223 | 184 | 222 | 223 | 221 |
| Tm[°C] | - | - | - | - | 289 |
| Reinheit [%] | 72 | 70 | 67 | 71 | 67 |
| Film transparent | ja | ja | ja | ja | nein |

Blockcopolymer A5 wurde zur Formkörpern verarbeitet (Zugstäbe, ISO-Stäbe). Die mechanischen Eigenschaften

wurden geprüft. Als Vergleichsprobe wurde ein Blend aus 50 Gew.-% Polyarylenether B1 und 50 Gew.-% Polyamid b2 eingesetzt. Dieser Blend wurde durch Mischen von einer Lösung von B2 und einer Lösung von B1 jeweils in N-Methylpyrrolidon hergestellt. Die Mischung der Lösungen wurde für einen Zeitraum von 6 h auf 190°C erhitzt. Anschließend wurde das Produkt durch Fällung in Wasser isoliert. Nach Extraktion mit Wasser wurde das Produkt bei 100°C im Vakuum getrocknet und zu den Probekörpern verarbeitet.

Die erhaltenen Ergebnisse sind Tabelle 2 zu entnehmen.

Tabelle 2

| | Blockcopolymer A5 | Vergleichsprodukt 1 |
|---|---|---|
| E-Modul [N/mm$^2$] | 2960 | 2940 |
| Zugfestigkeit [N/mm$^2$] | 87 | 73 |
| Reißdehnung [%] | 64 | 3 |
| Schlagzähigkeit [kJ/m$^2$] | 357 | 78 |

In den folgenden Tabellen sind die Zusammensetzung und die Ergebnisse der Untersuchungen der hergestellten Formmassen zu entnehmen.

| Formmasse | 1 | 2 | 3 | V1 | V2 | V3 |
|---|---|---|---|---|---|---|
| A5 | 90 | 80 | 70 | - | - | - |
| B1 | - | - | - | 45 | 40 | 35 |
| C1 | - | 10 | - | - | 10 | - |
| C2 | - | - | 30 | - | - | 30 |
| D | - | - | - | 45 | 40 | 35 |
| E1 | 10 | 10 | - | 10 | 10 | - |
| E-Modul [N/mm$^2$] | 2550 | 3670 | 9500 | 2520 | 3400 | 9150 |
| Reißdehnung [%] | 167 | 37 | 5,7 | 14 | 3,1 | 1,9 |
| Schlagzähigkeit [kJ/m$^2$] | 456 | 367 | 87 | 210 | 43 | 43 |

Tabelle 4

| Formmasse | 4 | 5 | V4 |
|---|---|---|---|
| A5 | 5 | 10 | - |
| B1 | 60 | 56,6 | 63,3 |
| C | 30 | 28,4 | 31,7 |
| E1 | 5 | 5 | 5 |
| E-Modul [N/mm$^2$] | 2580 | 2560 | 2570 |
| Reißdehnung [%] | 65 | 89 | 4 |
| Schlagzähigkeit [kJ/m$^2$] | 401 | 456 | 89 |

## Patentansprüche

1. Verfahren zur Herstellung von Blockcopolymeren A, enthaltend

α) einen oder mehrere Blöcke, die sich von Polyarylenethern mit wiederkehrenden Einheiten der allgemeinen Formel I

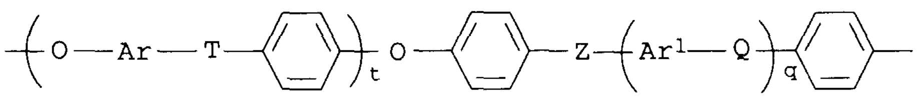 (I)

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z $-SO_2-$ oder C=O bedeutet und wenn t und q 0 sind, Z $-SO_2-$ oder C=O ist,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, zusammen mit dem C-Atom, an das sie gebunden sind, eine $C_4$- bis $C_7$-Cycloalkylgruppe bilden, die mit einer oder mehreren $C_1$- bis $C_6$-Alkylgruppen substituiert sein kann, bedeuten,

Ar und $Ar^1$ für $C_6$- bis $C_{18}$-Arylgruppen stehen, wobei diese unsubstituiert sein können oder mit $C_1$- bis $C_{10}$-Alkyl, $C_6$- bis $C_{18}$-Aryl, $C_1$- bis $C_{10}$-Alkoxy oder Halogen substituiert sein können

und Anhydridendgruppen der Formel II

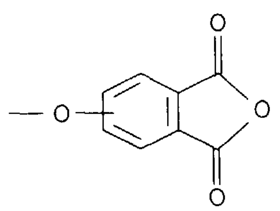 (II)

(Polyarylenether a) ableiten und

β) einem oder mehreren Blöcken, die sich von Aminoendgruppen enthaltenden Polyamiden b ableiten,

dadurch gekennzeichnet, daß man in einem Schritt Polyarylenether mit wiederkehrenden Einheiten der allgemeinen Formel I und die Hydroxy- oder Phenoxyendgruppen oder eine Mischung dieser Endgruppen enthalten (Polyarylenether a') mit Phthalsäureanhydriden der allgemeinen Formel III

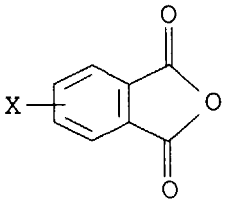 (III)

worin X Fluor, Chlor, Brom oder Jod bedeutet, zu den Polyarylenethern a umsetzt, und in einem weiteren Schritt

die Polyarylenether a mit den Polyamiden b in der Schmelze oder in einem Lösungsmittel umsetzt.

2. Verfahren nach Anspruch 1, dadurch gekennzeichnet, daß man a und b in der Schmelze in einem Extruder umsetzt.

3. Verfahren nach Anspruch 1, dadurch gekennzeichnet, daß man a und b in N-Methylpyrolidon als Lösungsmittel umsetzt.

4. Verwendung der nach dem Verfahren gemäß einem der Ansprüche 1 bis 3 hergestellten Blockcopolymeren A zur Herstellung von Formmassen.

5. Formmassen enthaltend, bezogen auf die Summe der Komponenten A bis E

A) 4 bis 98 Gew.-% Blockcopolymere A,

B) 1 bis 95 Gew.-% mindestens eines Polyarylenethers B,

C) 0 bis 60 Gew.-% faser- oder teilchenförmiger Verstärkungs- oder Füllstoffe oder deren Mischungen,

D) 1 bis 95 Gew.-% mindestens eines thermoplastischen Polyamids D und

E) 0 bis 40 Gew.-% schlagzähmodifizierende Kautschuke E.

6. Formmassen enthaltend, bezogen auf die Summe der Komponenten A, C und E

A) 1 bis 98 Gew.-% mindestens eines Blockcopolymeren A,

C) 1 bis 58 Gew.-% faser- oder teilchenförmiger Verstärkungs- oder Füllstoffe oder deren Mischungen und

E) 1 bis 40 Gew.-% schlagzähmodifizierender Kautschuk E.

7. Formmassen nach Anspruch 5, enthaltend Polyamide D aus, bezogen auf das Polyamid D, 40 bis 90 Gew.-% Einheiten, die sich von Terephthalsäure und Hexamethylendiamin ableiten, 0 bis 50 Gew.-% Einheiten, die sich von ε-Caprolactam ableiten und/oder 0 bis 60 Gew.-% Einheiten, die sich von Adipinsäure und Hexamethylendiamin ableiten.

8. Formmassen nach einem der Ansprüche 5 bis 7, in denen als Polyarylenether a solche mit 0 bis 100 Mol-% wiederkehrenden Einheiten $I_1$

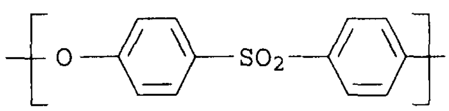

$(I_1)$

und 0 bis 100 Mol-% wiederkehrenden Einheiten $I_2$

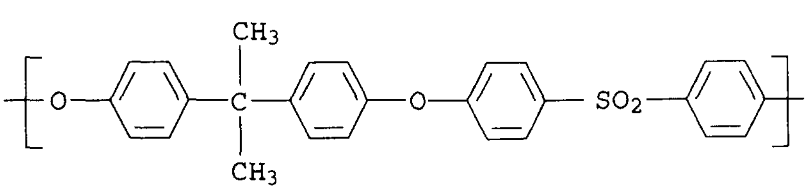

$(I_2)$.

verwendet werden.

9. Verwendung der Formmassen gemäß einem der Ansprüche 5 bis 7 zur Herstellung von Formkörpern, Fasern oder

Folien.

10. Formkörper, Fasern oder Folien, erhältlich aus den Formmassen gemäß einem der Ansprüche 5 bis 7.